# EUROPÄISCHE PATENTSCHRIFT

(11) **EP 0 763 546 B1**
(45) Veröffentlichungstag und Bekanntmachung des Hinweises auf die Patenterteilung: **28.05.1997**
(21) Anmeldenummer: 95114345.2
(22) Anmeldetag: 13.09.1995
(51) Int. Cl.: C08F 4/602

(54) **Verfahren zur Herstellung von Metallocen-Katalysatorsystemen auf inerten Trägermaterialien unter Verwendung von Gasphasenreaktoren**
Process for producing metallocene catalysts on inert carriers using gas phase reactors
Procédé de préparation de systèmes catalytiques à base de métallocène sur supports utilisant des réacteurs à phase gazeuse inertes

(43) Veröffentlichungstag der Anmeldung: 19.03.1997
(73) Patentinhaber: Witco GmbH, 59192 Bergkamen (DE)
(72) Erfinder: Becker, Ralf-Jürgen, Dr., D-59075 Hamm (DE); Rieger, Rainer, Dr., D-53121 Bonn (DE)

(56) Entgegenhaltungen:
- EP-A- 0 668 295
- EP-A- 0 672 671
- WO-A-95/15216

## Beschreibung

Metallocen-Katalysatorsysteme gewinnen zunehmend an Bedeutung als neue Generation von Katalysatorsystemen zur Herstellung von Polyolefinen ("Single Site Catalysts"). Diese neuen Katalysatoren bestehen im wesentlichen, wie bereits aus der klassischen Ziegler-Natta-Katalyse bekannt, aus einer Übergangsmetallverbindung als Katalysator sowie einer Cokatalysator-Komponente, beispielsweise einem Alkylaluminoxan, insbesondere Methylaluminoxan. Als Übergangsmetallverbindung werden bevorzugt Cyclopentadienyl-, Indenyl- oder Fluorenylderivate der Gruppe IVa des Periodensystems der Elemente eingesetzt. Solche Systeme besitzen im Gegensatz zu konventionellen Ziegler-Natta-Katalysatoren neben einer hohen Aktivität und Produktivität nicht nur die Fähigkeit zur gezielten Steuerung der Produkteigenschaften in Abhängigkeit von den eingesetzten Komponenten und den Reaktionsbedingungen, sondern eröffnen darüberhinaus den Zugang zu bislang unbekannten Polymerstrukturen mit vielversprechenden Eigenschaften im Hinblick auf technische Anwendungen.

In der Literatur ist eine Vielzahl von Publikationen erschienen, die die Herstellung spezieller Polyolefine mit solchen Katalysatorsystemen zum Gegenstand haben. Nachteilig in fast allen Fällen ist jedoch die Tatsache, daß zur Erzielung akzeptabler Produktivitäten ein hoher Überschuß an Alkylaluminoxanen, bezogen auf die Übergangsmetallkomponente, erforderlich ist (üblicherweise beträgt das Verhältnis Aluminium in Form des Alkylaluminoxans zu Übergangsmetall ca. 1000 : 1). Durch den hohen Preis der Alkylaluminoxane einerseits und durch in manchen Fällen erforderliche zusätzliche Polymer-Aufarbeitungsschritte ("deashing steps") andererseits wäre eine Polymerproduktion in technischem Maßstab auf Basis solcher Katalysatorsysteme vielfach unwirtschaftlich. Hinzu kommt, daß das für die Formulierung von Alkylaluminoxanen, insbesondere Methylaluminoxan, vielfach verwendete Lösemittel Toluol aus Gründen der Lagerstabilität hochkonzentrierter Formulierungen (starke Tendenz zur Gelbildung der Aluminoxanlösungen) sowie im Hinblick auf den Anwendungsbereich der letztendlich resultierenden Polyolefine aus toxikologischen Gründen zunehmend unerwünscht ist.

Eine signifikante Reduktion der benötigten Alkylaluminoxan-Menge in Bezug auf die Übergangsmetall-Komponente kann erreicht werden, indem Alkylaluminoxan auf inerte Trägermaterialien, bevorzugt SiO₂, aufgebracht wird (J. C. W. Chien, D. He, J. Polym. Science Part A, Polym. Chem., Vol.29, 1603-1607 (1991). Solche geträgerten Materialien besitzen darüberhinaus den Vorteil der leichten Abtrennbarkeit bei Polymerisationen in kondensierter Phase (Herstellung hochreiner Polymere) bzw. der Einsetzbarkeit als frei fließende Pulver in modernen Gasphasenprozessen, wobei die Kornmorphologie des Polymeren direkt durch die Partikelform des Trägers vorgegeben werden kann. Darüberhinaus sind trägerfixierte Alkylaluminoxane als trockene Pulver physikalisch stabiler als Lösungen mit vergleichbarem Al-Gehalt. Dies gilt insbesonders für Methylaluminoxan, das, wie bereits erwähnt, in toluolischer Lösung nach einer gewissen Lagerzeit zur Gelbildung neigt.

Auch, oder gerade die aus den Aluminoxan mit den Metallocenen gebildeten Metallocenkatalysatorsysteme sind in geträgerter Form wesentlicher stabiler als in Lösung.

In der Literatur werden bereits einige Möglichkeiten beschrieben, Alkylaluminoxane auf Trägern zu fixieren:
Die EP-A-0 369 675 (Exxon Chemical) beschreibt ein Verfahren, in dem die Immobilisierung von Alkylaluminoxanen durch Umsetzung einer ca. 10 %igen Lösung von Trialkylaluminium in Heptan mit hydratisiertem Silica (8,7 Gew.-% H₂O) erreicht wird.

In EP-A-0 442 725 (Mitsui Petrochemical) wird die Immobilisierung durch Reaktion einer Toluol/Wasser-Emulsion mit einer ca. 7 %igen Lösung von Trialkylaluminium in Toluol in Gegenwart von Silica bei Temperaturen von -50 °C bis +80 °C bewirkt.

Eine weitere Alternative eröffnet US-PS 5 026 797 (Mitsubishi Petrochemical) durch Umsetzung bereits vorgefertigter Alkylaluminoxan-Lösungen mit Silica (vorgetrocknet bei 600 °C) bei 60 °C und nachfolgende Auswaschung des nicht immobilisierten Alkylaluminoxan-Anteils durch Toluol.

US-PS 4 921 825 (Mitsui Petrochemical) letztendlich beschreibt ein Verfahren zur Immobilisierung von Alkylaluminoxan durch Fällung aus toluolischen Lösungen mittels n-Decan in Gegenwart von Silica.

Diese Verfahren sind teilweise technisch aufwendig, da sie unter anderem zu Beginn niedrige Reaktionstemperaturen bzw. mehrstufige Aufarbeitungsprozesse und dadurch Ausbeuteverluste im Hinblick auf die eingesetzte Menge an Aluminium in Form von Aluminiumtrialkylen beinhalten. Darüberhinaus wird die Raum/Zeit-Ausbeute durch den obligaten Einsatz relativ hoher Mengen an Lösungsmittel zum Teil erheblich beeinträchtigt.

Schließlich muß noch nachfolgend die Trägerfixierung des Metallocens erfolgen, um zu einem aktiven Polymerisationskatalysator zu gelangen. Ein weiterer Reaktionsschritt in einem Lösemittel ist damit notwendig. Dadurch wird die Wirtschaftlichkeit dieser Systeme ein weiteres mal in Frage gestellt.

Zur Trägerfixierung der Metallocene existieren ebenfalls mehrere Möglichkeiten.

Unter Trägerfixierung wird definitionsgemäß die Immobilisierung der eingesetzten Komponente auf einem inerten Träger verstanden; die Komponenten werden in der Art auf dem Trägermaterial abgeschieden, daß eine nachfolgende Eluierung durch Lösemittel nicht mehr möglich ist.

So kann einerseits das Metallocen aus Lösung mit dem suspendierten geträgerten Aluminoxan in Kontakt gebracht werden oder das Metallocen kann zuerst mit dem Aluminoxan zur Reaktion gebracht werden und das Reaktionsprodukt nachfolgend auf dem inerten Träger gebracht werden. Bei beiden Methoden sind die Aufarbeitungsschritte nicht trivial, da von den Reaktionstemperaturen und den Trocknungsbedingungen der Trägerungserfolg und die Aktivität des fertigen Katalysators entscheidend abhängen (vergl. EP-A-0 560 128, US-A 5 308 815).

Eine Aufgabe der vorliegenden Erfindung war es daher, diese Nachteile des Standes der Technik zu überwinden und ein wirtschaftliches Verfahren bereitzustellen, mittels welchem aktive Katalysatoren für die Olefinpolymerisation, bestehend aus Alkylaluminoxanen und Metallocenen, in einem Verfahrensschritt weitestgehend ohne Mitverwendung von organischen Lösungsmitteln in hoher Ausbeute und Homogenität in reproduzierbarer Weise auf inerten Trägermaterialien fixiert werden können, wobei die Kornmorphologie des Trägers erhalten bleibt und die Produkte letztlich als freifließende Pulver vorliegen.

Nach einem bisher der zwischen veröffentlichten Anmeldung EP-A-0 672 671 wurde gefunden, daß einige der vorab aufgeführten Nachteile dadurch beseitigt werden können, daß man die Synthese von Alkylaluminoxanen, insbesondere Methylaluminoxanen (MAO) und deren Fixierung auf inerten Trägern, unmittelbar über die Gasphase ohne jeglichen Einsatz von Lösungsmitteln und ohne zusätzliche Verfahrensschritte ausführt.

Gegenstand der EP-A-0 668 295 ist die Herstellung eines geträgerten Katalysators, welcher keine großen Partikelteilchen mehr enthalten soll (vgl. Seite 2, Zeilen 27 - 29). Zur Erreichung dieses Ziels wird eine Suspension hergestellt aus den Reaktanden, bestehend aus Aluminoxan und Metallocen und dem inerten Trägermaterial, welche dann sprühgetrocknet wird. Typischerweise wird dabei so verfahren, daß das Trägermaterial zu einer Suspension oder Lösung des Cokatalysators gegeben wird, um eine erste Suspension herzustellen. Zu dieser Suspension wird eine Lösung oder Dispersion eines Metallocens gegeben und erst diese Mischung nach einer Reaktionszeit von ca. 20 min (zur Bildung des aktiven Katalysatorkomplexes) sprühgetrocknet.

Die WO 95/15216 beschreibt ein Verfahren zur Herstellung von geträgerten Metallocenkatalysatoren, in welchem die wesentliche Stufe im Gegensatz zum bekannten Stand der Technik (vgl. Seite 2, Zeilen 10 - 12) darin besteht, daß
- das Metallocen verdampft wird,
- das Trägermaterial mit der verdampften Metallocenkomponente bei einer Temperatur behandelt wird, welche ausreichend hoch ist, um das Metallocen in dampfförmigem Zustand zu halten (270 - 280 °C für Zr-Metallocene),
- der Träger mit einer Menge an verdampfter Metallocenkomponente kontaktiert wird, welche ausreicht, daß wesentliche Teile der aktiven OH-Gruppen des Trägers mit dem Metallocen reagieren können,
- das nicht an den Träger gebundene Metallocen aus der Reaktionskammer entfernt wird,
- das so erhaltene Produkt mit einem Aktivator behandelt wird.

Es wurde nun gefunden, daß hier auch das Metallocen durch Variation der Anlagengeometrie in der Gasphase gleichzeitig und zusammen mit bzw. nach dem Aluminoxan geträgert werden kann, unabhängig davon, ob das Aluminoxan in der Gasphase oder gemäß Stand der Technik nach einer Trägerfixierung in der Flüssigphase und anschließender konventioneller oder erfindungsgemäßer Trocknung hergestellt wurde.

Bei einer Variante der erfindungsgemäßen Verfahrensführung ist auch die Prepolymerisation in einem Schritt möglich, so daß das Endprodukt sofort für die Polymerisation zur Verfügung steht.

Die erhaltenen Endprodukte sind freifließende Pulver, welche direkt für die Olefinpolymerisation als hochaktive Katalysatoren eingesetzt werden können. Die Kornmorphologie und die Korngrößenverteilung werden innerhalb des Verfahrens nicht negativ, sondern eher positiv verändert. Die Feinanteile des Trägermaterials können innerhalb der Gasphase durch die Trägerung aufgebaut, andererseits können kleinste Partikel auch gezielt ausgetragen werden. Durch die Variation der Gasströme und Verwendung geeigneter Reaktortypen und Reaktorgeometrien ist auch ein partikelgrößenorientierter, selektiver Austrag des Produktes möglich.

Durch gezielte Anpassung der Einsatzparameter können somit die Partikelgröße, die Aktivität und die Katalysatorkonzentration eingestellt werden.

Gegenstand der Erfindung ist somit ein Verfahren zur Herstellung von auf inerten Trägermaterialien fixierten Metallocenkatalysatorsystemen bestehend aus metallorganischen Verbindungen, Wasser und Metallocenen, welches dadurch gekennzeichnet ist, daß in erster Stufe die Trägermaterialien, die metallorganischen Verbindungen oder deren Lösungen bzw. Suspensionen, Wasser, mit dem Gasstrom in den Reaktor eingetragen und die Reaktion und die Fixierung der Reaktanden und/oder der Reaktionsprodukte auf den Trägermaterialien in der Gasphase durchgeführt und nachfolgend ein Metallocen oder dessen Lösung mit dem Gasstrom zudosiert und zusätzlich auf den Trägermaterialien fixiert wird und in zweiter Stufe die Trocknung der so hergestellten geträgerten Systeme ebenfalls in der Gasphase erfolgt und gegebenenfalls durch Zudosierung eines Olefins in die Gasphase eine Prepolymerisation durchgeführt wird.

Ein weiterer Gegenstand der Erfindung ist ein Verfahren zur Herstellung von auf inerten Trägermaterialien fixierten metallorganischen Verbindungen, Wasser und Metallocenen, welches dadurch gekennzeichnet ist, daß
- in erster Stufe die Trägermaterialien, die Aluminoxanverbindungen oder deren Lösungen bzw. Suspensionen mit einem Gasstrom in den Reaktor eingetragen und die Fixierung auf den Trägermaterialien in der Gasphase durchgeführt und nachfolgend ein Metallocen oder dessen Lösung mit dem Gasstrom zudosiert und zusätzlich auf den Trägermaterialien fixiert wird und
- in zweiter Stufe die Trocknung der unmittelbar so hergestellten geträgerten Systeme ebenfalls in der Gasphase erfolgt und gegebenenfalls durch Zudosierung eines Olefins in die Gasphase eine Prepolymerisation durchgeführt wird.

Die Art der Reaktoren wird bestimmt durch die gewünschte Partikelgröße, der Menge an Aluminoxan und Konzentration des gegebenenfalls in Lösung vorliegenden Metallocens auf dem Partikel. Unabhängig davon, ob die Fixierung des Aluminoxans in der Gasphase oder in der Flüssigphase auf dem festen Träger stattfindet, ist in jedem Fall eine Fixierung des Metallocens in der Gasphase auf den Träger und gegebenenfalls anschließend eine Prepolymerisation möglich.

Ein weiterer Gegenstand der Erfindung sind auf Trägermaterialien fixierte Metallocenkatalysatorsysteme, hergestellt gemäß den erfindungsgemäßen Verfahren.

Die Herstellung des Aluminoxans in der Flüssigphase erfolgt nach allgemein bekannten Verfahren (EP-A-0 623 624, US-PS 5 157 008, 5 206 401) durch Hydrolyse der Alkylaluminiumverbindungen mit Wasser. Anschließend kann der Träger nach allgemein bekannten Verfahren mit Aluminoxan beladen, von der Flüssigphase getrennt und als feuchte Partikel in einem Trockner nachbehandelt werden. Bei diesem Trocknungsvorgang kann neben Entfernung des Lösemittels gleichzeitig das Metallocen fixiert werden.

Bei den Trocknungsverfahren der nach den an sich bekannten thermischen Verfahren hergestellten geträgerten Katalysatorsystemen wird die Kornmorphologie des Trägers durch die mechanische Beanspruchung der verschiedenen Verfahren negativ beeinflußt. Es resultieren Pulver uneinheitlicher, vom Ausgangsträgermaterial stark abweichender Struktur mit verbreiteter Korngrößenverteilung. Erfahrungsgemäß weisen die mit diesen Katalysatorsystemen dargestellten Polymere negative physikalische Eigenschaften auf.

Bei der erfindungsgemäßen Trocknung und/oder Trägerung in Gasphasenreaktoren treten diese Nachteile nicht auf. Durch die Auswahl geeigneter Reaktoren und Variation der genutzten Gasströme ist erstmals der Austrag einer gewünschten einheitlichen Fraktion der Katalysatorpartikel einstellbar. In der gleichen Stufe kann noch die Umsetzung mit einem Olefin zu den entsprechenden Prepolymeren stattfinden.

Bei den erfindungsgemäß mitverwendbaren Reaktoren müssen die Funktionen Reaktion der Aluminiumalkyle mit Wasser und/oder Metallocen und die anschließende bzw. gleichzeitige Trocknung berücksichtigt werden. Deshalb werden nur bestimmte Reaktortypen verwendet.

Diese Reaktortypen sind gekennzeichnet durch ein hohes Gas-Feststoffverhältnis, moderate Temperaturen und einer räumlichen Trennung zwischen Aufgabeort der Reaktanden und deren Austrag aus dem Reaktionssystem. Beim Austrag sollten der Gasstrom, das verdampfte Lösemittel und der Metallocen-Aluminium-Katalysator vorzugsweise gleichzeitig in den Komponenten getrennt werden, damit eine schädliche Konzentration an Lösemitteln nicht in den Katalysatorsystemen verbleibt.

Als Beispiele für geeignete Reaktortypen können Sprühtrockner, Stromrohre, Taumeltrockner und Wirbelschichttrockner stehen, welche auf anderen Anwendungsgebieten zum Stand der Technik gehören. Die dort angewandten Verfahrensparameter können in modifizierter Form in den erfindungsgemäßen Verfahrensweisen Anwendung finden.

Kennzeichnend für alle erfindungsgemäß mitverwendbaren Reaktoren ist eine Fluidisierung und starke Auflockerung der Partikel durch eine Gasphase mit späterer räumlicher Trennung der Gasphase von dem Feststoffpartikel.

Erfindungsgemäß werden der zu trocknende trägerfixierte Co-Katalysator, vorzugsweise feuchtes, trägerfixiertes Aluminoxan oder Trimethylaluminium, Wasser und der Träger in den Reaktor dosiert und mittels dem Gasstrom verteilt. Gleichzeitig wird das Metallocen unmittelbar mit den Komponenten im Einlaß oder an einer weiteren örtlich und/oder zeitlich nachgeschalteten Stelle eindosiert. Nach Abtrennung des Lösemittels bzw. des Gases kann eine gewünschte Prepolymerisation direkt ohne vorherige Isolierung des Katalysators erfolgen.

In der kontinuierlichen Verfahrensweise ist eine interne Rückführung der Partikel nach Abtrennung der Gas- und Lösemittelphase möglich. Gasphase und Lösemittel können unabhängig voneinander separiert und/oder recycliert werden. Die Feststoffpartikel und die Gasphase können während des Betriebes kontinuierlich ausgetauscht werden.

Bei mehrstufiger Verfahrensweise ist eine ideale Kombination der Reaktorsysteme möglich. Als Beispiele können die Verbindungen eines Sprühtrockners mit einem Stromrohr oder einem Wirbelschichttrockner zu einem Sprüh-Stromrohrtrockner, Sprüh-Stromrohrreaktor, Sprüh-Wirbelschichtreaktor, Sprüh-Wirbelschichttrockner genannt werden. Die Betriebsweise dieser Reaktoren/Trockner gehört zum allgemeinen Stand der Technik. Die Trocknerreaktoren können vom Vakuumbereich bis in den mittelhohen Druckbereich von 10⁶Pa betrieben werden. Dies ist einerseits abhängig von der maximalen thermischen Belastbarkeit der zu trocknenden Substrate, andererseits von der Verdampfungsenthalpie der abzutrennenden Lösemittel.

Weitere Vorteile der Trocknerreaktoren liegen in einer kurzen Kontaktzeit und damit in einer geringen thermischen Belastung der Katalysatoren in den erfindungsgemäßen Reaktortrocknersystemen. Obwohl erfindungsgemäß die Trocknungsstufe in Gasphasenreaktoren im Gesamtverfahren bevorzugt wird, kann die Trocknung auch als separates Verfahren Anwendung finden. Dabei können alle nach konventionellen Verfahren in Form von Suspensionen und Lösungen anfallenden Systeme und deren Mischung mit inerten Trägern vorteilhaft und schonend getrocknet werden.

Ein weiterer Gegenstand der Erfindung ist daher die separate Trocknung von in Lösungen oder Suspensionen anfallenden metallorganischen Verbindungen oder deren Mischungen, gegebenenfalls unter Mitverwendung von inerten Trägermaterialien.

Zur Aufrechterhaltung der Gasströme können darüberhinaus die als Reaktionsprodukte anfallenden Alkane dienen, sofern diese unter den gegebenen Reaktionsbedingungen gasförmig vorliegen. Die Dosierung der Reaktanden Trialkylaluminium, insbesondere Trimethylaluminium (TMA) und Wasser, sowie der Metallocenlösung in die erfindungsgemäß verwendeten Reaktoren kann vorteilhaft über die verwendeten Gasströme erfolgen. Durch Regulierung der jeweiligen Gasströme läßt sich sowohl das gewünschte Methyl/Aluminium-Verhältnis des Alkylaluminoxans als auch der Beladungsgrad des Trägers systematisch steuern. Bei dafür geeigneten Trägermaterialien wie z. B. SiO₂ kann der Reaktionspartner Wasser darüberhinaus an die Oberfläche des Trägers in gebundener Form eingebracht werden.

Sowohl bei der direkten gasförmigen oder versprühten Einspeisung von Trialkylaluminium, insbesondere Trimethylaluminium (TMA) und Wasser in die Gasphase (Gasstrom dient hier einzig zur Aufrechterhaltung der Fluidisierung des Trägermaterials) als auch bei der Einspeisung von suspendiert geträgerten Katalysatorsystemen ist ein kontinuierliches Betreiben der Anlage möglich. In allen Fällen bleibt die ursprüngliche Kornmorphologie und Korngrößenverteilung des Trägers erhalten bzw. ist sie steuerbar.

Das Lösemittel wird während der Gasphasenbehandlung ausgetauscht und läßt sich in einer nachgeschalteten Abscheidereinrichtung abtrennen. Das Endprodukt ist daher weitestgehend frei von Lösemittelanteilen.

Als erfindungsgemäß verwendbare Trägermaterialien werden die porösen Oxide eines oder mehrerer der Elemente der Haupt-Gruppen II, III oder IV sowie der II. und IV. Nebengruppe des Periodensystems wie ZrO₂, TiO₂, B₂O₃, CaO, ZnO, BaO, vorzugsweise Al₂O₃ und MgO und insbesondere SiO₂, eingesetzt.

Diese Trägermaterialien können Korngrößen im Bereich von 1 - 300 µm, vorzugsweise 10 - 200 µm, aufweisen; Oberflächen von 10 - 1000 m²/g, insbesondere 100 - 500 m²/g; N₂-Porenvolumina von 0,5 - 3 cm³, vorzugsweise 1 - 2 cm³.

Diese Träger sind handelsübliche Materialien, welche die angegebenen Werte in statistischer Verteilung enthalten.

Der Wassergehalt der Trägermaterialien kann je nach Verfahrensweise zwischen ca. 0 bis 15 Gew.-% variieren. Die gewünschten Wassergehalte können nach den allgemein bekannten Hydratisierungsverfahren oder Calcinierungsverfahren von handelsüblichen Trägermaterialien eingestellt werden.

Erfindungsgemäß werden unter geträgertem "Metallocenkatalysatorsystem" die Komponenten Co-Katalysator (z. B. Aluminoxane, bororganische Verbindungen) sowie deren Kombination mit den genannten Metallocenen verstanden.

Diese erfindungsgemäß mitverwendbaren Verbindungen, ihre Herstellung und Verwendung sind in den EP-A-0 480 390, EP-A-0 413 326, EP-A-0 530 908, EP-A 0 344 887, EP-A 0 420 436, EP-A 0 416 815, EP-A 0 520 732 eingehend beschrieben.

Zur Herstellung der Aluminoxane kann das molare Verhältnis von Wasser zu Alkylaluminiumverbindungen, insbesondere Trimethylaluminium, in Bereichen von 0,5 : 1 bis 1,5 : 1, vorzugsweise 0,7 : 1 bis 1,3 : 1 liegen und kann auf den gewünschten Wert eingestellt werden.

Als aluminiumorganische Verbindungen sind prinzipiell alle auf diesem Gebiet üblichen Verbindungen verwendbar, welche mit Wasser zu Aluminoxanen hydrolysiert werden können. Erfindungsgemäß bevorzugt sind Trialkylaluminiumverbindungen (R)₃ Al mit kurzkettigen Alkylresten mit 1 - 10 C-Atomen, insbesondere 1 - 5 C-Atomen wie Methyl-, Ethyl-, Propyl-, isoPropyl-, Butyl-, isoButyl-, tert. Butyl-, Pentyl-Rest. Erfindungsgemäß bevorzugt wird Trimethylaluminium.

Das Verhältnis von Träger zu Aluminoxan ist innerhalb relativ weiter Grenzen variierbar. Falls gewünscht, kann mit dem erfindungsgemäßen Verfahren trägerfreies Aluminoxan (Aluminiumgehalt theoretisch maximal 46,5 Gew.-%) hergestellt werden. Erfindungsgemäß wird es vorzugsweise so gewählt, daß auf dem resultierenden freifließenden Pulver aus Trägermaterial und Aluminoxan 3 - 40 Gew.-% Aluminium, vorzugsweise 5 - 30 Gew.-% Aluminium, in Form von Aluminoxanen vorliegen.

Außer diesen Verbindungen sind erfindungsgemäß auch andere Co-Katalysatoren mitverwendbar wie insbesondere bororganische Verbindungen wie z. B. Tris-[pentafluorophenyl]boran, Triphenylcarbeniumtetrakis[pentafluorophenyl]borat, N,N-Di-methylaniliniumtetrakis[pentafluorophenyl]borat.

Als Metallocenkomponente stehen alle Verbindungen zur Verfügung, die in der metallocenkatalysierten Polymersiation Anwendung finden, wie beispielsweise verbrückte, unverbrückte Metallocen-Sandwichkomplexe sowie entsprechende Halbsandwich-Komplexe.

Die Darstellung der Metallocenkatalysatoren durch Zudosieren der Metallocenlösung erfolgt nach den Erfordernissen, die an das Katalysatorsystem gestellt werden. Es können zwischen 0,1 und 30 Gew.% Metallocen, die in Form ihrer Lösung eingebracht werden, geträgert werden, vorzugsweise zwischen 0,5 bis 15 %.

Die Metallocenkomponente wird in der Art eingebracht, daß ein Aluminium-Metallocenverhältnis (bezogen auf das ME = Metallocen-Zentralatom) so eingestellt wird, daß ein hochaktiver Katalysator ausgebildet wird. Typischerweise beträgt dieses Molverhältnis Al : ME = 5000 : 1 bis 10 : 1, im besonderen 500 : 1 bis 50 : 1.

Dazu werden nach Bildung des Aluminoxans die Metallocene zudosiert in der Art, daß sich das gebildete Metallocenium-Katalysatorsystem auf dem Trägermaterial bilden kann oder als komplettes System erst auf dem Träger abgeschieden wird.

Als Prepolymerisat-Olefin können alle Olefine Anwendung finden, die zur Darstellung der aktiven Katalysatorverbindung genutzt werden können bzw. die in der Polymerisation Verwendung finden. Neben Ethen gehören dazu insbesondere alpha-Olefine wie beispielsweise 1-Propen oder 1-Hexen.

Die Prepolymerisation erfolgt zeitabhängig durch Zudosieren des Olefins in Abhängigkeit von den Notwendigkeiten der nachfolgenden Polymerisation.

Dazu kann nach Trägerung des Aluminoxans bzw. des Metalloceniumkatalysatorsystems über eine Düse das monomere Olefin in den Gasstrom eingebracht werden und so das Prepolymerisat bilden. Dabei finden die gleichen Volumenströme Anwendung, die auch für die Trägerung der Aluminoxankomponente genutzt werden.

Das erfindungsgemäße Verfahren ermöglicht die Herstellung von geträgerten Metallocenkatalysatorsystemen mit nahezu quantitativen Ausbeuten an immobilisiertem Aluminium und Metallocen, bezogen auf eingesetzte Komponenten. Aufgrund gezielt einstellbarer und reproduzierbarer Verfahrensbedingungen weisen diese mit dem erfindungsgemäßen Verfahren hergestellten geträgerten Metallocenkatalysatorsysteme hohe Aktivitäten auf und sind somit hervorragend geeignet für die Olefinpolymerisation.

Weiterhin ist durch die einfache Kombination mit einer Prepolymerisation in der gleichen Prozeßführung und Anlage die Darstellung der direkt für einige Polymerisationsprozesse einsetzbaren Prepolymere möglich.

Die nach dem erfindungsgemäßen Verfahren hergestellten geträgerten Katalysatorsysteme und Prepolymere können problemlos in den bekannten Olefin-Polymerisationsprozessen, wie beispielsweise auch WO 94/14856 oder US-PS 5 086 025 bzw. US-PS 5 234 878, eingesetzt werden.

### Beispiele

Das erfindungsgemäße Verfahren wird im folgenden anhand von Beispielen illustriert. Die in den Beispielen angegebenen Werte zu den Prozeßvariablen - Temperatur, Druck und Volumenströme - sind über die gesamte Versuchsdurchführung gemittelte Werte. Die Versuche wurden so durchgeführt, daß diese Mittelwerte innerhalb des bevorzugten Bereiches lagen.

Untersuchungen zum Scale-up zeigen konstant regelbare Masse- und Volumenstromverhältnisse.

Die Verfahrensparameter können innerhalb der angegebenen Minima und Maxima zur Variierung bzw. Optimierung von Produkten herangezogen werden.

Die angegebenen Verfahrensparameter lassen sich weitestgehend auf die verschiedenenn verwendbaren Reaktortypen anwenden. Die reaktortypbedingten Anpassungen der Verfahrensparameter sind Bestandteil des allgemeinen Fachwissens.

### Allgemeine Angaben zu den Reaktionsparametern bei der Durchführung der erfindungsgemäßen Verfahren in einer Laborapparatur

| | | |
|---|---|---|
| Masse Träger: | max. | 100,0 g |
| | min. | 10,0 g |
| | bevorzugter Bereich | 35,0 g - 50 g |
| Temperatur: | min. | 2 °C |
| | max. | 120 °C |
| | bevorzugter Bereich | 20 °C - 90 °C |
| Druck: | | |
| Druckschwankungen resultieren aus der Art des Gasphasenreaktors und dem Beladungsgrad. | | |
| | min. | 0,5 ·10⁶Pa |
| | max. | 20 ·10⁶Pa |
| | bevorzugter Bereich | 1 - 1,5 ·10⁶Pa |
| Volumenströme: | max. | 2000 l/min |
| | min. | 50 l/min |
| | bevorzugter Bereich | 200 l/min - 1200 l/min |
| Verweilzeit in der Gasphase: | min. | 0,1 sec |
| | max. | 10 sec |
| | bevorzugter Bereich | 0,1 sec - 5 sec. |

### Beispiel 1

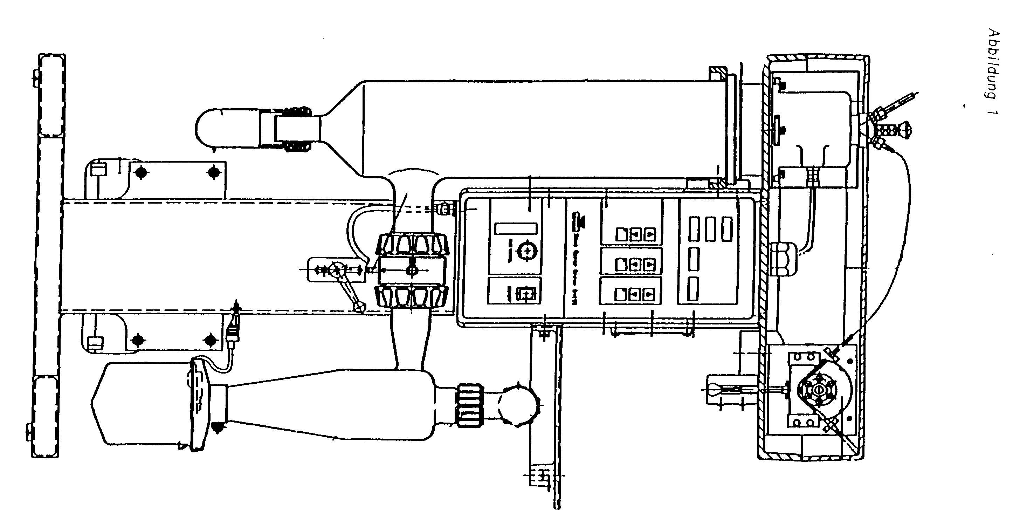

### Sprühtrocknerreaktor Abbildung 1

In ein Sprühtrocknungsgerät der Fa. Büchi (B 191) mit modifizierterter Sprühdüse und unter Veränderung der Gaszufuhr, so daß Inertgasatmosphäre (Stickstoff) verwendet werden konnte, wurde über eine Schlauchpumpe unter Inertbedingungen eine Suspension von Silica in Toluen oder einem anderen inerten Lösemittel in den Sprühturm eingebracht. Durch Verwendung einer handelsüblichen Mehrkomponentendüse(3-Komponentendüse, temperiert, mit einem Düsendurchmesser von 0,7 mm) konnten die Silicasuspension, das Aluminiumalkyl, insbesondere Trimethylaluminium, und Wasser eindosiert werden. Nach Anpassung der Teilströme war so eine in situ Trägerung des Aluminoxan mit gleichzeitiger Abtrennung des organischen inerten Suspensionsmittels in der Gasphase möglich. Nach Abscheidung in einem Zyklon fiel das geträgerte Produkt in Form eines freifließenden, lösemittelfreien Pulvers an. Die charakteristischen kornmorphologischen Kenndaten des Silicas blieben durch diese schonende Behandlung während der in situ Trägerung weitestgehend unverändert.

50 g Silica (Type Grace Sylopol 2104; mittlere Korngröße 80 µm, mittlere Oberfläche 280 - 310 m²/g, Porenvolumen 1,5 ml/g, Wassergehalt 3,5 - 7 %) wurden in 150 g trockenem Toluen unter Stickstoffatmosphäre suspendiert. Über eine Schlauchpumpe wurde diese Suspension der Düse des Sprühtrocknerreaktors zugeführt. In dieser Düse wurde gleichzeitig mit der Silicasuspension Trimethylaluminium und Wasser zugedüst. Die Temperatur in dem Sprühtrocknerreaktor wurde bei konstant 100 °C gehalten. Die Gasströme zur Verdüsung und zur Gasphasenförderung wurden so gewählt, daß etwa 2 - 4 ml Suspension pro Minute gefördert und versprüht wurden. Die Dosiergeschwindigkeiten für Wasser und Trimethylaluminium wurden so gewählt, daß auf 1 g Trimethylaluminium 0,25 g Wasser dosiert wurden. Insgesamt wurden 67,8 g Trimethylaluminium und 17 g Wasser dosiert. Nach 72 min war die Dosierung beendet. Man erhielt 112 g entsprechend 91 %iger Ausbeute als ein freifließendes Pulver mit einem Aluminiumgehalt von 24,8 % und einem Methyl/Aluminiumverhältnis von 1 : 1,07.

### Beispiel 2

### Sprühtrocknerreaktor (Abbildung 1)

Dosierung von Metallocen-Lösung.
Zu einer Suspension von 50 g des in Beispiel 1 dargestellten geträgerten Aluminoxansystems in 150 g trockenem Toluen unter inerter Stickstoffatmosphäre wurde in der Mehrkomponentensprühdüse des Büchi-Sprühtrocknerreaktors 100 ml einer 1 %igen Metallocen-Lösung (Bis[n-butylcyclopentadienyl]zirconiumdichlorid) in Toluen in der Art zudosiert, daß pro Milliliter Metallocenlösung 20 ml Trägersuspension versprüht/dosiert wurden.
Die Temperatur des Sprühturms wurde bei 100 °C gehalten. Das Produkt war ein gelblichbraunes, lösemittelfreies freifließendes Puver mit einem Aluminiumgehalt von 24,7 % und einem Zirkoniumgehalt von 0,44 %, entsprechend einem Al : Zr Verhältnis von 189 : 1.

### Beispiel 3

### Sprühtrocknerreaktor (Abbildung 1)

Eine Suspension aus 50 g Silica (entsprechend Beispiel 1) in trockenen 150 g Toluen wurde mit 565 g Methylaluminoxan-Lösung (5,5 % Aluminiumgehalt) und 220 mL einer 1 %igen Metallocenlösung (entsprechend Beispiel 2), hergestellt nach bekannten Verfahren, versetzt und über eine Schlauchpumpe in einen Büchi-Sprühtrockner eingedüst (Aspirator - Stickstoff - 100 %, Schlauchpumpe 45 %, 100 °C Inlettemperatur, temperierte Einfachdüse 0,7 mm, Sprühzeit 104 min). Man erhielt 115 g entsprechend einer 94 %igen Ausbeute als ein gelblichbraunes, lösemittelfreies (Resttoluengehalt <0,1 %) freifließendes Pulver mit einem Aluminiumgehalt von 24,6 % und einem Zirkoniumgehalt von 0,37 %.

### Vergleichsbeispiel 3 a)

### Konventionelle Trocknung gemäß Stand der Technik.

In einem Dreihalskolben unter Stickstoffatmosphäre wurden 200 g einer Suspension entsprechend Beispiel 3 eingefüllt und über eine Umkehrfritte das Suspensionsmittel weitgehend abgenutscht. Der verbleibende Rückstand wurde im Vakuum (50 °C, 12 h, 0,1 hPa) getrocknet. Das Produkt besaß einen Resttoluengehalt von 5,3 %, einen Aluminiumgehalt von 23,2 % und einen Zirkoniumgehalt von 0,35 %.

### Beispiel 4

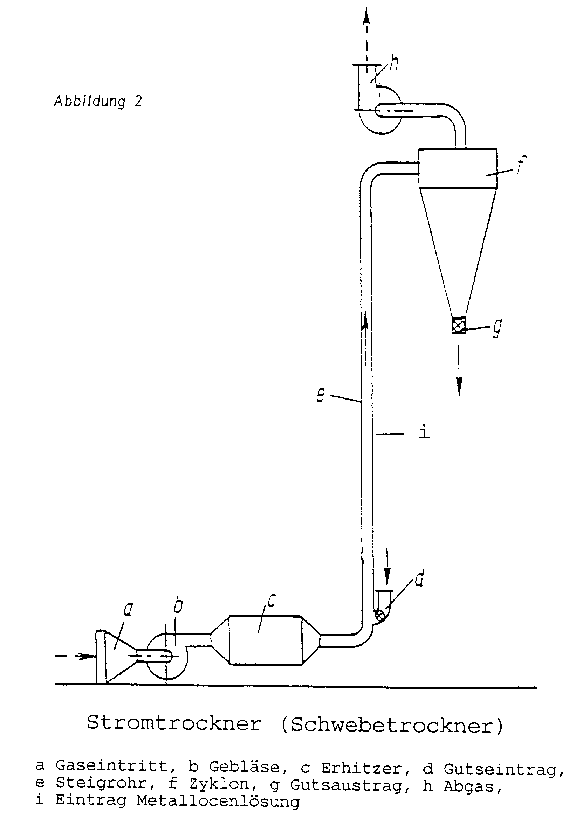

### Stromrohrreaktor (Abbildung 2)

Eine Suspension entsprechend Beispiel 3 wurde über eine Schlauchpumpe dem unteren Teil eines Stromrohrtrockners (Rohrdurchmesser 50 mm, Länge 2000 mm) zugeführt. Die Gasströme wurden mit einer Gasleerrohrgeschwindigkeit von 6 m/s zugeführt, so daß das Material transportiert und hierbei vollständig getrocknet abgeschieden wurde. Die Temperatur des zugeführten Gasstroms wurde auf 80 °C eingestellt. In einer Höhe von 800 mm wurde über eine Düse die Metallocenlösung (Bis[n-butylcyclopentadienyl]zirconiumdichlorid) zudosiert.
Das Produkt zeigte folgende Charakteristika: Aluminiumgehalt 24,6 %, Zirkoniumgehalt 0,39 %.

### Beispiel 5

### Wirbelbettreaktor

In einem Wirbelbettreaktor wurden 50 g Silica geträgertes Katalysatorsytem (entsprechend Beispiel 3) in Form einer Suspension in einem inerten organischen Suspensionsmittel (hier Toluensuspension) oder als feuchter Filterkuchen eingefüllt. Die Gasströme wurden so reguliert, daß eine stehende Wirbelschicht aufgebaut werde. Der Gasstrom wurde temperiert (50 °C ) und so die Suspension schonend vom Lösemittel befreit. Die Trocknungszeit betrug ca 2,5 h. Die Ausbeute war quantitativ; das Produkt besaß einen Aluminiumgehalt von 24,7 %, einen Zirkoniumgehalt von 0,41 % und einen Resttoluengehalt von 0,1 %.

### Beispiel 6

### Wirbelbettreaktor

Zu 50 g des Produktes aus Beispiel 5 wurde unter Beibehaltung der gleichen Verfahrensparameter zusammen mit dem Gasstrom 1 Vol-% eines Olefins (Ethen) dosiert. Die erfolgende Prepolymerisation konnte anhand der Massenzunahme bzw. der Dosierzeit zurückgerechnet werden. Bei Rückführung der Gasstöme konnte das Olefin nahzu quantitativ aus dem Trägergasstrom absorbiert werden. Das Produkt zeigte eine Massenzunahme von 2,6 % und konnte quantitativ isoliert werden. Der Aluminiumgehalt betrug 24,0 %, der Zirkoniumgehalt 0,39 %.

### Abbildungen:

(Quellen: Abbildung 1: Büchi AG, Bedienungsanleitung Mini Spray Dryer B-191; Abbildung 2: Lehrbuch der Verfahrenstechnik, Leipzig 1967, VEB Verlag für Grundstoffindustrie)

## Patentansprüche

1. Verfahren zur Herstellung von auf inerten Trägermaterialien fixierten Metallocenkatalysatorsystemen aus metallorganischen Verbindungen, Wasser und Metallocenen, dadurch gekennzeichnet, daß
- in erster Stufe die Trägermaterialien, die metallorganischen Verbindungen oder deren Lösungen bzw. Suspensionen, Wasser, mit einem Gasstrom in den Reaktor eingetragen und die Reaktion und die Fixierung der Reaktanden und/oder der Reaktionsprodukte auf den Trägermaterialien in der Gasphase durchgeführt und nachfolgend ein Metallocen oder dessen Lösung mit dem Gasstrom zudosiert und zusätzlich auf den Trägermaterialien fixiert wird und
- in zweiter Stufe die Trocknung der unmittelbar so hergestellten geträgerten Systeme ebenfalls in der Gasphase erfolgt und gegebenenfalls durch Zudosierung eines Olefins in die Gasphase eine Prepolymerisation durchgeführt wird.

2. Verfahren gemäß Anspruch 1, dadurch gekennzeichnet, daß als metallorganische Verbindungen Alkylaluminiumverbindungen eingesetzt werden.

3. Verfahren gemäß Anspruch 2, dadurch gekennzeichnet, daß als Alkylaluminiumverbindung Trimethylaluminium eingesetzt wird.

4. Verfahren gemäß Anspruch 2 und 3, dadurch gekennzeichnet, daß das molare Verhältnis von Wasser : Alkylaluminiumverbindung im Bereich von 0,5 : 1 bis 1,5 : 1 liegt.

5. Verfahren gemäß den Ansprüchen 1 bis 4, dadurch gekennzeichnet, daß das molare Verhältnis von Metallocen zu Alkylaluminiumverbindungen im Bereich von 1 : 500 bis 1 : 10 liegt.

6. Auf inerten Trägermaterialien immobilisierte Metallocenkatalysatorsysteme gemäß Anspruch 5, dadurch gekennzeichnet, daß auf dem Trägermaterial 3 - 40 Gew.-% Aluminium, bezogen auf geträgertes Katalysatorsystem, in Form von Aluminoxanen fixiert sind.

7. Auf inerten Trägermaterialien immobilisierte Metallocenkatalysatorsysteme gemäß Anspruch 5, dadurch gekennzeichnet, daß auf dem Trägermaterial 0,1 bis 30 Gew.-% Metallocen, bezogen auf geträgertes Katalysatorsystem, in Form des Metallocenkatalysatorsystems fixiert sind.

8. Verfahren zur Herstellung von auf inerten Trägermaterialien fixierten metallorganischen Verbindungen, Wasser und Metallocenen, dadurch gekennzeichnet, daß
- in erster Stufe die Trägermaterialien, die Aluminoxanverbindungen oder deren Lösungen bzw. Suspensionen mit einem Gasstrom in den Reaktor eingetragen und die Fixierung auf den Trägermaterialien in der Gasphase durchgeführt und nachfolgend ein Metallocen oder dessen Lösung mit dem Gasstrom zudosiert und zusätzlich auf den Trägermaterialien fixiert wird und
- in zweiter Stufe die Trocknung der unmittelbar so hergestellten geträgerten Systeme ebenfalls in der Gasphase erfolgt und gegebenenfalls durch Zudosierung eines Olefins in die Gasphase eine Prepolymerisation durchgeführt wird.

## Claims

1. Process for the preparation of metallocene catalyst systems, fixed to inert support materials, from organometallic compounds, water and metallocenes, characterised in that
- in a first stage, the support materials, the organometallic compounds or solutions or suspensions thereof and water are introduced into the reactor with a gas stream and the reaction and fixing of the reactants and/or of the reaction products to the support materials is carried out in the gas phase and subsequently a metallocene or a solution thereof is metered in with the gas stream and additionally fixed to the support materials, and
- in a second stage, drying of the supported systems prepared directly thus is likewise effected in the gas phase and optionally prepolymerisation is carried out by metering an olefin into the gas phase.

2. Process according to claim 1, characterised in that alkylaluminium compounds are used as organometallic compounds.

3. Process according to claim 2, characterised in that trimethylaluminium is used as alkylaluminium compound.

4. Process according to claims 2 and 3, characterised in that the molar ratio of water:alkylaluminium compound is in the range of from 0.5:1 to 1.5:1.

5. Process according to claims 1 to 4, characterised in that the molar ratio of metallocene to alkylaluminium compounds is in the range of from 1:500 to 1:10.

6. Metallocene catalyst systems, immobilised on inert support materials, according to claim 5, characterised in that from 3 to 40% by weight, based on supported catalyst system, of aluminium in the form of aluminoxanes is fixed to the support material.

7. Metallocene catalyst systems, immobilised on inert support materials, according to claim 5, characterised in that from 0.1 to 30% by weight, based on supported catalyst system, of metallocene in the form of the metallocene catalyst system is fixed to the support material.

8. Process for the preparation of organometallic compounds, fixed to inert support materials, water and metallocenes, characterised in that
- in a first stage, the support materials, the aluminoxane compounds or solutions or suspensions thereof are introduced into the reactor with a gas stream and fixing to the support materials is carried out in the gas phase and subsequently a metallocene or a solution thereof is metered in with the gas stream and additionally fixed to the support materials, and
- in a second stage, drying of the supported systems prepared directly thus is likewise effected in the gas phase and optionally prepolymerisation is carried out by metering an olefin into the gas phase.

## Revendications

1. Procédé pour préparer des systèmes catalyseurs à base de métallocènes, fixés sur des matériaux supports inertes, systèmes constitués de composés organométalliques, d'eau et de métallocènes, procédé caractérisé en ce que
- dans une première étape, les matériaux supports, les composés organométalliques ou leurs solutions ou suspensions, l'eau, sont introduits avec le courant gazeux dans le réacteur, et la réaction et la fixation des réactifs et/ou des produits de la réaction sur les matériaux supports sont mises en oeuvre en phase gazeuse, puis on ajoute progressivement un métallocène ou sa solution en même temps que le courant gazeux et en outre on le fixe sur les matériaux supports, et
- dans une deuxième étape, on procède, toujours en phase gazeuse, au séchage des systèmes supportés ainsi préparés, et éventuellement, par addition d'une oléfine à la phase gazeuse, on procède à une prépolymérisation.

2. Procédé selon la revendication 1, caractérisé en ce qu'on utilise, en tant que composés organométalliques, des alkylaluminiums.

3. Procédé selon la revendication 2, caractérisé en ce qu'on utilise, en tant qu'alkylaluminium, le triméthylaluminium.

4. Procédé selon la revendication 2 ou 3, caractérisé en ce que le rapport en moles de l'eau à l'alkylaluminium est compris entre 0,5 : 1 et 1,5 : 1.

5. Procédé selon les revendications 1 à 4, caractérisé en ce que le rapport en moles du métallocène aux alkylaluminiums est compris entre 1 : 500 et 1 : 10.

6. Systèmes catalyseurs à base de métallocènes, immobilisés sur des matériaux supports inertes, selon la revendication 5, caractérisés en ce que 3 à 40 % en poids d'aluminium, rapportés au système catalyseur supporté, sont fixés sous forme d'aluminoxanes sur le matériau support.

7. Systèmes catalyseurs à base de métallocènes, immobilisés sur des matériaux support inertes, selon la revendication 5, caractérisés en ce que 0,1 à 30 % en poids d'un métallocène, par rapport au système catalyseur supporté, sont fixés sur le matériau support sous forme du système catalyseur à base de métallocène.

8. Procédé pour préparer des composés organométalliques, de l'eau et des métallocènes fixés sur des matériaux supports inertes, caractérisé en ce que
- dans une première étape, les matériaux supports, les composés de l'aluminoxane ou leurs solutions ou suspensions sont introduits dans le réacteur avec un courant gazeux, et la fixation sur les matériaux sup-ports est réalisée en phase gazeuse, puis on ajoute un métallocène ou sa solution en même temps que le courant gazeux, et en outre on l'applique sur les matériaux supports, et
- dans une deuxième étape, on procède au séchage des systèmes supportés ainsi préparés directement, ici aussi en phase gazeuse, et, éventuellement par addition d'une oléfine à la phase gazeuse, on procède à une prépolymérisation.
